# EUROPEAN PATENT SPECIFICATION

(11) **EP 3 809 826 B1**
(45) Date of publication and mention of the grant of the patent: **29.11.2023**
(21) Application number: 19742944.2
(22) Date of filing: 21.06.2019
(51) Int. Cl.: A01G 25/16

(54) **CONTROL KIT FOR AN IRRIGATION SYSTEM**
STEUERUNGSKIT FÜR EIN BEWÄSSERUNGSSYSTEM
KIT DE COMMANDE POUR UN SYSTÈME D'IRRIGATION

(30) Priority: 25.06.2018 IT 201800006634
(43) Date of publication of application: 28.04.2021
(73) Proprietor: Stiatti, Anna, 20145 Milano (IT); Stiatti, Alberto, 20145 Milano (IT); Stiatti, Matteo Maria, 21030 Duno (VA) (IT)
(72) Inventor: Stiatti, Anna, 20145 Milano (IT); Stiatti, Alberto, 20145 Milano (IT); Stiatti, Matteo Maria, 21030 Duno (VA) (IT)
(74) Representative: Branca, Emanuela
(86) International application number: PCT/IB2019/055259
(87) International publication number: WO 2020/003081

(56) References cited:
- EP-A1- 3 189 726
- WO-A1-2010/025573
- US-A1- 2008 288 116
- US-B1- 8 793 024

## Description

The present invention refers to an irrigation system according to claim 1.

In the state of the art there are known irrigation systems comprising measuring devices driven into the soil comprising a multiplicity of sensors that measure environmental parameters and control units connected to these sensors.

The measuring device sends the data of the environmental parameters to the control unit.

These measuring devices are connected to each other and with the wireless control unit for example by means of radio, WI-FI or 3G mobile telephone connections.

The control unit is connected via Internet to a database comprising a multiplicity of data on plant varieties and local weather conditions.

The control unit, based on the data of the environmental parameters, on data on a growth of the plant varieties, on local weather conditions, commands an opening of at least one electrovalve to irrigate at least one area of soil.

Disadvantageously, the irrigation system to correctly operate must be connected via Internet to the database and cannot operate autonomously.

Disadvantageously, the measuring device does not operate as a control device, since it does not command any electrovalves and a different control unit from the measuring device is necessary.

Disadvantageously, in order to make the irrigation system operate properly it is necessary to know in advance the type of soil and the plant variety that is planted there.

Document US 8 793 024 B1 discloses an irrigation system and method with a controller, soil moisture sensors and irrigation valves comprising at least one control device driven into a soil which controls an opening and a closing of said at least one electrovalve basing on the moisture level of a zone of soil. If the soil moisture control unit has not detected the proper moisture when the irrigation cycle is complete it can automatically increase the run time of the watering schedules within the program by adjusting the associated seasonal adjust feature higher. It will continue to do this over time until operation of that zone runs long enough for the soil moisture to sense the moisture in the soil. After the cycle is complete the soil moisture control unit will calculate the amount of time the zone ran and compare that with the amount of time it took to moisten the soil.

Document WO 2010/025573 A1 discloses a method of irrigation using calculations of soil water retention capacity disclosing an upper limit value that defines a water-saturated state corresponds to the soil moisture at which the soil is so saturated with water that no more water can seep into the subsoil due to gravity.

The purpose of the present invention consists of realizing a control kit for an irrigation system of a soil that overcomes the drawbacks of the prior art.

In accordance with the invention such purpose is accomplished with a control kit according to claim 1.

Other characteristics are provided in the dependent claims.

The characteristics and the advantages of the present invention will become clearer from the following description, given as an example and not for limiting purposes, referring to the attached schematic drawings, in which:
figure 1 is a view of an irrigation system scheme comprising a control kit comprising a control device and an electrovalve according to the present invention;
figure 2 is a view of a system scheme of the control kit for the irrigation system comprising an alternative control device comprising the electrovalve;
figure 3 is a view of a system scheme of the control kit for the irrigation system comprising the control device that commands a control unit comprising the electrovalve;
figure 4 is a flow diagram of a calibration phase of the process carried out by the control kit according to the present invention;
figure 5 is a flow diagram of a phase of normal operation of the process carried out by the control kit;
figure 6 shows a graph of a curve of moisture of the soil as a function of the time during the calibration step;
figure 7 shows a graph of the curve of moisture of the soil as a function of the time during the phase of normal operation of the control kit;
figure 8 is a flow diagram of a phase of alternative normal operation of the process carried out by the control kit.

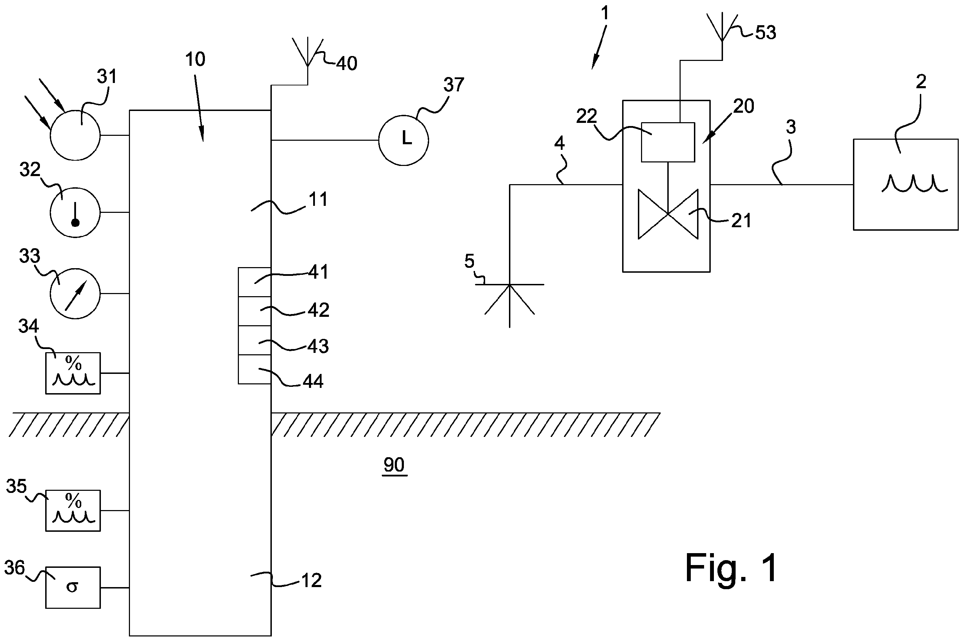

With reference to the quoted figures and in particular figure 1 a system scheme of a control kit 1 for an irrigation system is shown. The control kit 1 comprises at least one electrovalve 20 and at least one control device 10 driven into a soil 90 to be irrigated.

The device 10 controls the electrovalve 20 open and close to allow or not allow the passage of a fluid, for example water, coming from an irrigation circuit 2 of the irrigation system, which is for example a mains water system, towards at least one irrigation dispenser 5 which is a sprinkler or a dripper that distributes water to the soil 90.

The irrigation circuit 2 comprises a multiplicity of pipes 3, 4 and a multiplicity of irrigation dispensers 5 that are distributed on the soil 90 to be irrigated.

The electrovalve 20 is in flow communication with at least one inlet pipe 3 and at least one outlet tube 4 of the irrigation circuit 2.

The electrovalve 20 comprises a valve 21 that switches from an open position to let the water of the irrigation circuit 2 flow to a closed position to block the water of the irrigation circuit 2 and an actuator 22, for example an electric or electromagnetic servomotor, which controls the opening and closing of the valve 21.

The control device 10 comprises a multiplicity of sensors 31-36 for a measurement of environmental parameters, which are observable data.

The multiplicity of sensors 31-36 of the control device 10 comprises an environmental luminosity sensor 31 which is a dusk sensor for measuring luminosity conditions of the environment; an atmospheric temperature sensor 32 for measuring a local atmospheric temperature; an atmospheric pressure sensor 33 for measuring the atmospheric pressure; an atmospheric humidity sensor 34 for measuring the local atmospheric humidity; a soil moisture sensor 35 for measuring the soil moisture and a soil acidity sensor 36 for measuring an electrical conductivity and obtaining a pH value of the soil.

The control device 10 also comprises a measurer of time intervals 37 which is a chronometer that measures time intervals between an opening and a closing of the electrovalve 20 to calculate an irrigation duration.

The control device 10 comprises an upper portion 11 adapted for staying out from the soil 90 and a lower portion 12 that is buried in the soil 90 during the operation of the control device 10.

The upper portion 11 of the control device 10 comprises the environmental luminosity sensor 31, the atmospheric temperature sensor 32, the atmospheric pressure sensor 33, the atmospheric humidity sensor 34.

The lower portion 12 of the control device 10 comprises the soil moisture sensor 35 and the soil acidity sensor 36.

The control device 10 comprises a wireless data communication device 40 which is an antenna; a processor 41 for processing data; a memory 42 for containing data; a data communication interface 43, which is a USB port; a signalling device 44, which is a luminous signalling device like for example an RGB LED for indicating a state of the control device 10.

The control device 10 switches from a multiplicity of states that indicate for example whether the control device 10 is charged or uncharged, whether it is commanding the electrovalve 20 to irrigate, whether it is loading or downloading data, or indicate the state of the area of soil 90 to be irrigated where the control device 10 is located.

The electrovalve 20 mounts a wireless data communication device 53 which is an antenna.

The control device 10 commands the opening or closing of the electrovalve 20 communicating through the wireless data communication devices 40 of the control device 10 and 53 of the electrovalve 20.

It is possible to provide for a multiplicity of devices 10 to be distributed on the soil 90 so that at least one device 10 is driven into every area of soil 90 to be irrigated that it is wished to be kept monitored.

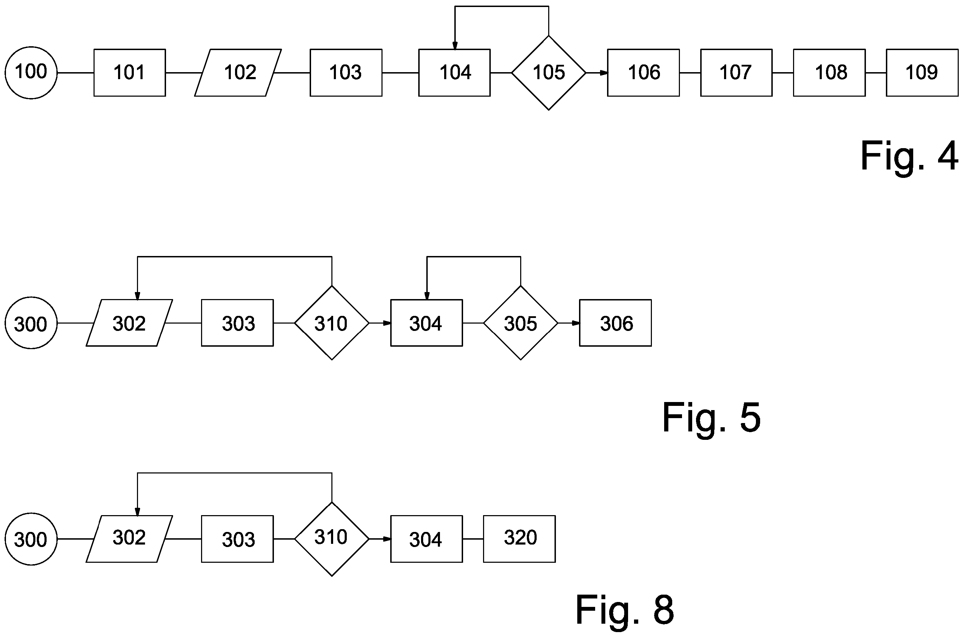

As far as the operation of the control kit 1 for the irrigation system is concerned, an operating process is shown in a flow diagram shown in figures 4 and 5.

The operating process of the control kit 1 for irrigating the soil 90 comprises a calibration step 100 shown in figure 4 and a step of normal operation 300 shown in figure 5.

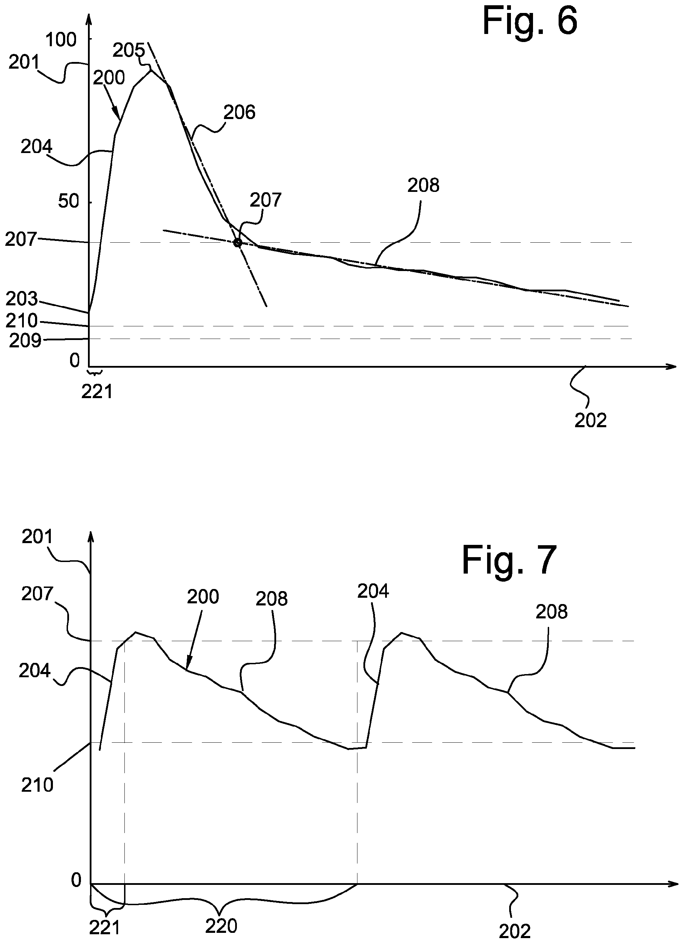

During the calibration step 100 the environmental parameters are measured continuously by the sensors 31-36 of the control device 10, and in particular figure 6 shows a graph of a curve 200 of the moisture of the soil 201 in percentage as a function of the time 202 in arbitrary units.

The curve 200 varies according to the plant variety, the climate and the soil and depends on different factors that are linked both to the type of plant variety and to parameters of the soil 90, such as for example compactness and type of soil, the size of the free gaps in the soil, and to climatic environmental factors.

The calibration step 100 of the irrigation process advantageously makes it possible to calibrate the control kit 1 to the conditions of the plant variety and of the soil so as to waste the least possible water during the phase of normal operation 300 of the control kit 1 to irrigate the soil 90.

The calibration step 100 of the process comprises an operation of burying 101 the lower portion 12 of the control device 10 in a point of the soil 90 to be irrigated.

The processor 41 of the control device 10 commands the multiplicity of sensors 31-36 to measure 102 the environmental parameters at pre-set time intervals, where the time intervals are measured by the measurer of time intervals 37.

The processor 41 of the control device 10 saves 103 a multiplicity of environmental parameters measured at a given measurement time as observable data in the memory 42 of the control device 10.

Initially the processor 41 saves the initial environmental parameters 203 at the initial measurement time in the memory 42.

The processor 41 of the control device 10 communicates 104 to the electrovalve 20 to switch from the closed position to the open position to irrigate the soil 90 until it is saturated with water.

A rising portion 204 of the curve 200 of the graph of figure 6 shows the increase in moisture of the soil as a function of the irrigation time 202 while the electrovalve 20 is in open position. When the soil 90 is saturated with water, the curve reaches a maximum 205 moisture of the soil 90 beyond which it is no longer possible to increase the moisture of the soil 90.

The processor 41 of the control device 10 checks 105 whether the value of the moisture of the soil of the last moisture measurement of the soil 90 is greater than the value of the moisture of the soil 90 of the previous measurement. If the value of the moisture of the soil 90 increases between the previous and the last measurement, then the processor 41 of the control device 10 leaves the electrovalve 20 open to continue to irrigate 104, otherwise the processor 41 switches the electrovalve 20 from the open position to the closed position 106 interrupting the flow of water for the irrigation. Indeed, once the maximum 205 of the curve 200 has been reached, the moisture of the soil 90 remains constant between the last and the previous measurement, given that the soil 90 is saturated with water.

A steeply descending portion 206 of the curve 200 of the graph of figure 6 shows a very fast decrease in moisture of the soil 90 as a function of the time during a step of draining by gravity of the water from the soil saturated with water until it reaches a maximum threshold value of moisture of the soil called maximum water retention capacity of the soil 207.

The maximum water retention capacity of the soil 207 represents the moisture value of the ground when micro pores of the soil 90 are saturated with water and in the macro pores of the soil 90 there is only air. The micro pores are indeed capable of retaining water by capillarity, whereas the macro pores have lost the water by draining by gravity.

The maximum water retention capacity of the soil 207 is a value that depends on the type of soil 90 and on other environmental parameters.

Beyond the maximum threshold value that represents the maximum water retention capacity of the soil 207, the soil 90 loses water much less rapidly since it is in a step of evapotranspiration 208, due to two phenomena that are the transpiration of the plant variety that absorbs water from the roots and the release into the air through the leaf body and the evaporation of water directly from the soil to the atmosphere. The step of evapotranspiration 208 is shown in a slowly descending portion 208 of the curve 200 of moisture of the soil 90 that is much less steep with respect to the steeply descending portion of curve 206 that takes place in the step of draining by gravity 206 of the water.

During the step of draining by gravity 206 of the water from the soil 90, the plant variety does not have time to efficiently absorb the water and therefore it is all wasted water. During the step of evapotranspiration 208 the plant variety is capable of absorbing water efficiently and effectively.

The processor 41 of the control device 10 saves 107 in the memory 42 the moisture data of the soil of maximum water retention capacity of the soil 207, i.e. when the curve 200 changes slope between the step of draining by gravity 206 and the step of evapotranspiration 208.

The processor 41 of the control device 10 estimates 108 a minimum threshold of moisture of the soil that represents a maximum suffering threshold of the plant variety 209 below which the plant variety would die due to lack of water. The estimation of the processor 41 takes place on the basis of mathematical and statistical algorithms and on the basis of observable data present in the memory 42 that are observable parameters that comprise the maximum water retention capacity of the soil 207, the other observable data measured by the sensors 31-36, the time interval between the maximum 205 and the maximum water retention capacity of the soil 207, data present in the memory 42 relative to a generic plant variety.

During the calibration step 100 of the irrigation process, the estimation 108 of the maximum suffering threshold of the plant variety 209 by the processor 41 of the control device 10, can be estimated to a higher degree of certainty by providing that the processor 41 of the control device 10 continues to make the sensors measure 102 the environmental parameters and save 103 these parameters in the memory 42 during the step of evapotranspiration shown in the portion 208 of the curve 200. When the processor 41 of the control device 10 measures a moisture of the soil below the maximum suffering threshold of the plant variety estimated earlier, the processor 41 saves in the memory the time interval between the measurement of the value of maximum water retention capacity of the soil 207 and the maximum suffering threshold of the plant variety 209, recalculating the maximum suffering threshold of the plant variety through mathematical and statistical algorithms and on the basis of the observable data present in the memory 42 that are observable parameters that comprise the maximum water retention capacity of the soil 207, the other observable data measured by the sensors 31-36, the time interval between the maximum 205 and the maximum water retention capacity of the soil 207, the maximum suffering threshold of the plant variety 209 estimated 108 earlier, the time interval between the measurement of the value of maximum water retention capacity of the soil 207 and the maximum suffering threshold of the plant variety 209, data present in the memory 42 relative to a generic plant variety.

The processor 41 saves 109 the value of moisture of the soil that represents the maximum suffering threshold of the plant variety 209.

The processor 41 estimates a value of moisture of the soil greater than that of the maximum suffering threshold of the plant variety 209 that represents a value of better minimum threshold 210. The value of better minimum threshold 210 is for example 5-10% higher than the maximum suffering value of the plant variety 209. This minimum threshold value 210 represents a value of moisture of the soil that the processor 41 estimates on the basis of mathematical and statistical algorithms and on the basis of the observable data present in the memory 42 that are observable parameters that comprise the maximum water retention capacity of the soil 207, the other observable data measured by the sensors 31-36, the time interval between the maximum 205 and the maximum water retention capacity of the soil 207, the maximum suffering threshold of the plant variety 209 earlier estimated 108, the time interval between the measurement of the value of maximum water retention capacity of the soil 207 and the maximum suffering threshold of the plant variety 209, data present in the memory 42 relative to a generic plant variety, or to a pre-set percentage value to be added to that of maximum suffering threshold of the plant variety 209.

During the step of normal operation 300 shown in figure 5 the environmental parameters are measured 302 continuously by the sensors 31-36 of the control device 10, and in particular figure 7 shows a graph of a curve 200 of the moisture of the soil 201 in percentage as a function of the time 202 in arbitrary units.

The curve 200 of moisture of the soil of figure 7 measures the moisture of the soil 201 as a function of the time during the step of normal operation 300 of the control kit 1.

The processor 41 of the control device 10 saves 303 a multiplicity of environmental parameters measured at a certain measurement time as observable data in the memory 42 of the control device 10.

The processor 41 of the control device 10 checks 310 whether the value of the moisture of the soil is below the value of the moisture of the soil 90 of the better minimum threshold 210. If the value of the moisture of the soil is greater than the better minimum threshold 210, then it continues to measure and to save observable data in the memory 42, otherwise the control device 10 switches the electrovalve 20 from the closed position to the open position 304 irrigating the soil 90.

A rising portion 204 of the curve 200 of the graph of figure 7 shows the increase in moisture of the soil as a function of the irrigation time 202 while the electrovalve 20 is in open position.

The processor 41 of the control device 10 continues to make the sensors 31-36 measure 302 the observable parameters.

The processor 41 of the control device 10 compares 305 the value of moisture of the soil and if it finds it to be above the value of moisture of the soil corresponding to the maximum water retention capacity of the soil 207, then it interrupts the irrigation switching the electrovalve 20 from the open position to the closed position 306, otherwise it continues to keep the electrovalve 20 open continuing to irrigate the soil 304.

Given that the irrigation took place up to the threshold of maximum water retention capacity of the soil 207, the portion 208 of curve 200 of the moisture of the soil 90 as a function of the time will have a slower slope because it is due to the phase of evapotranspiration and not to the step of draining by gravity.

Advantageously the control device 10 provides less water and for a shorter time than the soil 90 not wasting water and avoiding a step of draining by gravity of the water from the soil, avoiding a step of saturation of the soil.

Advantageously, the time interval 220 between one irrigation and the next is short with respect to conventional irrigation systems, as shown in figure 7, given that the soil of the plant variety is always kept within the optimal thresholds to feed the plant variety, i.e. within the threshold of maximum water retention capacity of the soil 207 and the better minimum threshold 210.

Advantageously, the irrigation frequency of the soil 90 commanded by the control kit 1 depends on the effective moisture of the soil 90 and not on pre-set irrigation times.

Advantageously, it is not necessary to connect via Internet through a control unit to decide when to irrigate, since the soil 90 is constantly kept under surveillance by the control device 10.

Advantageously, it is not necessary to connect via Internet to predict whether it will rain to block the irrigation, given that the high frequency of short irrigations commanded by the control kit 1 allow to interrupt the irrigation within a short time and until the value of the moisture of the soil will not be lower than to the better minimum threshold 210.

Advantageously, the control kit 1 does not provide for predetermined irrigation time intervals between one irrigation and another, given that the irrigation depends only on the measurement of the observable parameters, such as for example the moisture of the soil 90 to define when the soil 90 is above the threshold of maximum water retention capacity 207 or below the better minimum threshold.

Advantageously, the control kit 1 has much higher performance since it adapts the irrigation to the soil and to the plant variety without having the need to know which soil it is and which plant variety it is.

Advantageously, the control kit 10 does not need any clock to operate, since the control kit 1 does not provide for measuring a schedule and has not pre-set schedule, since the irrigation does not start at a certain schedule, but due to a measurement of the environmental parameters by the sensors 31-36, like for example the moisture of the soil 90 above or below thresholds 207, 210.

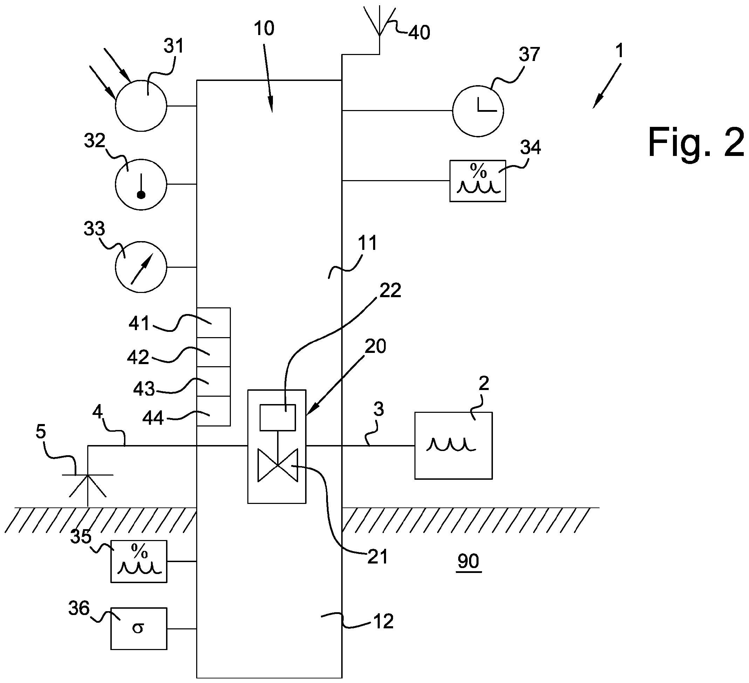

Alternatively, it is possible to foresee, as shown in figure 2, that the device 10 comprises the electrovalve 20 to command the irrigation of the soil 90. In this alternative no antenna 40 is necessary to communicate with the electrovalve 20, which is mounted together with the control device 10.

Alternatively, instead of the maximum water retention capacity 207, it is possible for a user to select a maximum soil moisture value, a value that is saved in the memory 42. In this alternative, during the phase of normal operation 300, the processor 41 of the control device 10 compares 305 the value of moisture of the soil and if it is found to be greater than the maximum soil moisture value selected by the user as saved in the memory 42, then the processor 41 interrupts the irrigation switching the electrovalve 20 from the open position to the closed position 306, otherwise it continue to keep the electrovalve 20 open, continuing to irrigate the soil 90.

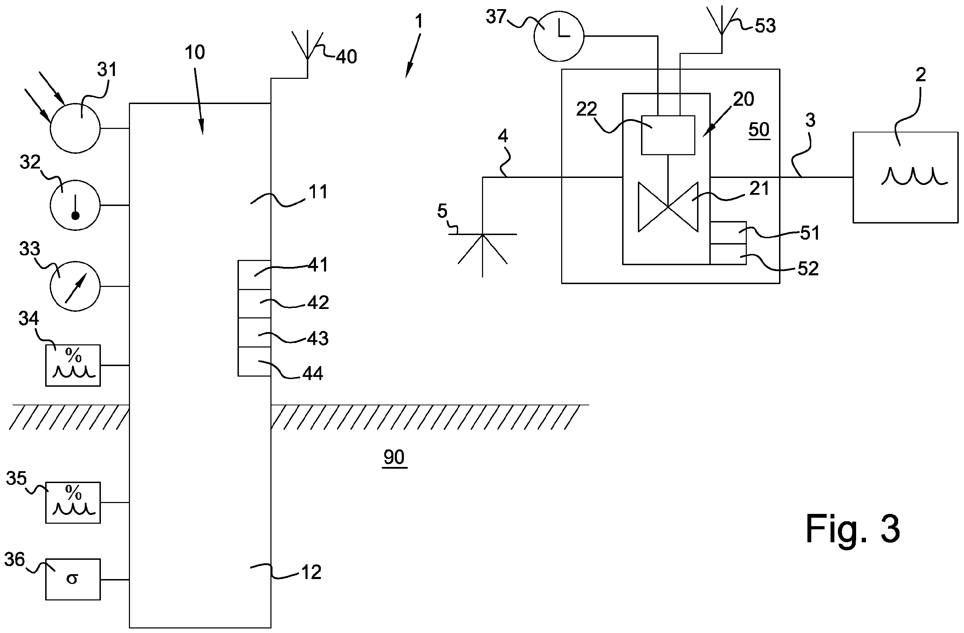

Alternatively, it is possible to foresee for the measurer of time intervals 37 to be mounted with the electrovalve 20 as for example shown in figure 3.

More in general, it is possible to foresee for the control kit 1 to comprise the measurer of time intervals 37 that can be mounted with the control device 10 or with the electrovalve 20.

Alternatively, it is possible to foresee there is no measurer of time intervals 37 at all since the time interval necessary to estimate the minimum threshold value can be estimated through a direct measurement during the calibration step 100.

Alternatively, the calibration process 100 measures the irrigation time interval 221 to reach the value of moisture of the soil 90 corresponding to the value of maximum water retention capacity of the soil 207 and saves this irrigation time interval 221 in the memory 42. In this alternative, the measurer of time intervals 37 measures the irrigation time interval 221. In this alternative during the phase of normal operation 300 of the control kit 1 as shown in figure 8, the processor 41 of the control device 10 does not compare 305 the value of moisture of the soil to verify whether it is found to be above the value of moisture of the soil corresponding to the maximum water retention capacity of the soil 207, but the processor 41 estimates that the moisture of the soil 90 reaches the maximum water retention capacity of the soil 207 when the soil 90 is irrigated for the duration of the irrigation time interval 221 present in the memory 42 and thus the processor 41 commands the electrovalve to irrigate 320 simply the soil 90 for the duration of the irrigation time interval 221. This alternative thus needs the control kit 1 to include the measurer of time intervals 37 mounted with the control device 10 or with the electrovalve 20.

Alternatively, the calibration process 100 measures the irrigation time interval 221 to reach a maximum soil moisture value chosen by the user and saves this irrigation time interval 221 in the memory 42.

Alternatively, the processor 41 during the calibration step 100 that foresees the irrigation of the soil 90 up to saturation does not continue to compare 105 the value of soil moisture measured by the soil moisture sensor 35, but irrigates for a time interval that is sufficiently long and pre-set in the memory 42, such that it is certain that the curve 200 reaches the maximum 205 moisture of the soil 90 beyond which it is no longer possible to increase the moisture of the soil 90.

Alternatively, as shown in figure 3 the control device 10 can be connected through an antenna 40 to a control unit 50 of a known irrigation system. In this alternative, the control device 10 communicates to a processor 51 of the known control unit 50 that comprises another memory 52, to switch the electrovalve 20 included in the known control unit 50 from the open position to the closed position.

Again alternatively, it is possible to foresee that data relative to the plant variety to be able to be transmitted to the control device 10 and inserted in the memory 42.

Again alternatively, it is possible to foresee that the value of moisture of the soil corresponding to the maximum water retention capacity of the soil 207 and the value of moisture of the soil corresponding to the better minimum threshold 210 are pre-set in the memory 42 of the control device 10 as moisture values of the soil initially pre-set and thus the control kit 1 can still operate, even if less efficiently, even if the user of the control kit 1 does not actuate the calibration phase 100.

Again alternatively, the control device 10 can transmit the observable data measured by the sensors 31-36 and the threshold values 207 and 210 to a centralised database, for example loading these data directly via antenna 40, or at first downloading them onto a USB stick through the interface 43 and then transmitted via Internet by a user.

Alternatively, the control device 10 verifies through the environmental luminosity sensor 31 that the luminosity conditions are above or below certain luminosity thresholds and decides not to irrigate when luminosity conditions are comparable with those of night time or not to irrigate when the luminosity conditions and the environmental temperature correspond to the part of the day when the sun is intensely shining on the plant.

Alternatively, the environmental parameters are measured 302 at pre-set time intervals by the sensors 31-36 of the control device 10.

Again alternatively, the processor 41 of the control device 10 comprises an artificial intelligence module and in particular the artificial intelligence module of the processor 41 is a classifying processor capable of actuating a comparison and recognition process through statistical algorithms of the curve 200 of observable data measured by the multiplicity of sensors 31-36 in the calibration step 100 and a multiplicity of curves 200 of corresponding observable data of a multiplicity of plant varieties present in said at least one memory 42. Once the measured curve 200 is identified with the curve 200 of a plant variety present in the database, the artificial intelligence module of the processor 41 identifies the values of better minimum threshold 210 and of maximum water retention capacity of soil 207 typical for the plant variety thus identified.

Alternatively, it is not the processor 41 that commands said multiplicity of sensors 31-36 to measure 102, 302 the environmental parameters, but the sensors 31-36 measure independently from the processor 41 the observable data and transmit them to the processor 41 to save them 103, 303 in the memory 42.

The invention thus conceived can undergo numerous modifications and variants; moreover, all the details can be replaced by technically equivalent elements. In practice, the materials used, as well as the dimensions, can be any according to the technical requirements. The scope of the invention is defined by the appended claims.

## Claims

1. Irrigation system comprising a control kit (1), the irrigation system comprising at least one electrovalve (20) and at least one sensor of a multiplicity of sensors (31-36) for a measurement of at least one environmental parameter, said at least one electrovalve (20) is adapted to switch from an open position to let a fluid of the irrigation circuit (2) flow through, to a closed position to block the fluid of the irrigation circuit (2),
wherein control kit (1) comprises at least one control device (10) driven into a soil (90) which controls an opening and a closing of said at least one electrovalve (20),
said at least one control device (10) comprises at least one soil moisture sensor (35) of the multiplicity of sensors (31-36),
at least one processor (41) for processing data and
at least one memory (42) for containing data,
wherein at least said soil moisture sensor (35) measures (302) continuously or at predefined time intervals values of moisture of the soil (90) where the control device (10) is driven,
said at least one memory (42) comprises at least one maximum soil moisture value and another value of soil moisture corresponding to a better minimum threshold (210),
wherein said better minimum threshold (210) is a soil moisture threshold value that is 5-10% higher than a maximum suffering threshold of the plant variety (209) below which the plant variety would die due to lack of fluid,
said at least one processor (41) of the control device (10) checks (310) whether the value of the moisture of the soil (90) measured by said soil moisture sensor (35) is lower than the value of soil moisture corresponding to said better minimum threshold (210), and if verified it commands said at least one electrovalve (20) to switch from the closed position to the open position irrigating the soil (90) until said at least one processor (41) estimates that the moisture of the soil (90) reaches the maximum soil moisture value, commanding said at least one electrovalve (20) to switch from the open position to the closed position,
wherein a soil moisture value corresponding to a maximum water retention capacity of the soil (207) is estimated by said at least one control device (10) in a calibration step (100), wherein said maximum water retention capacity of the soil (207) represents a moisture threshold value between a step of fluid drainage by gravity (206) and a step of evapotranspiration (208) of the soil and of a plant variety planted in the irrigated soil, wherein said processor (41) commands (104) said at least one electrovalve (20) to switch from the closed position to the open position to irrigate said soil (90) until the irrigated soil (90) is saturated with fluid reaching a maximum (205) moisture of the soil (90), said at least one processor (41) saves (107) in said at least one memory (42) at least a multiplicity of soil moisture data as a function of time while said at least one electrovalve (20) is in closed position, identifying the value of maximum water retention capacity of the soil (207) when a curve (200) of said multiplicity of soil moisture data changes slope between the step of fluid drainage by gravity (206) and the step of evapotranspiration (208) of the soil (90).

2. Irrigation system according to claim 1, **characterised in that** said at least one processor (41) of the control device (10) estimates that the moisture of the irrigated soil (90) reaches the maximum soil moisture value while said at least one electrovalve (20) is in open position and said at least one processor (41) compares (305) a value of moisture of the soil (90) measured by said soil moisture sensor (35) with the value of moisture of the soil corresponding to the maximum soil moisture value present in the memory (42) and if said at least one processor (41) finds that the measured value is higher than the maximum soil moisture value interrupts the irrigation of the soil (90) making said at least one electrovalve (20) switch from the open position to the closed position (306).

3. Irrigation system according to any one of the claims 1 or 2, **characterised in that** the control kit (1) comprises a measurer of time intervals (37) which measures time intervals between an opening and a closure of said at least one electrovalve (20) or which measures time intervals to reach a determined value of moisture of the soil.

4. Irrigation system according to claim 3, **characterised in that** said at least one memory (42) comprises an irrigation time interval (221) to irrigate said soil (90) to the value of moisture of the soil (90) corresponding to the maximum soil moisture value, said at least one processor (41) of the control device (10) estimates that the moisture of the irrigated soil (90) reaches the maximum soil moisture value while said at least one electrovalve (20) is in open position when said at least one electrovalve (20) remains in open position for a time corresponding to said irrigation time interval (221), then said at least one processor (41) commands (304) said at least one electrovalve (20) to remain open for the duration of said irrigation time interval (221) and then to switch from the open position to the closed position (320).

5. Irrigation system according to any one of the claims 1-4, **characterised in that** said maximum soil moisture value corresponds to a soil moisture value selected by a user.

6. Irrigation system according to any one of the claims 1-4, **characterised in that** said maximum soil moisture value corresponds to a maximum water retention capacity of the soil (207), where the maximum water retention capacity of the soil (207) represents a threshold value of moisture between a step of fluid drainage by gravity (206) and a step of evapotranspiration (208) of the soil and of a plant varied planted in the irrigated soil.

7. Irrigation system according to any one of the claims 1-6, **characterised in that** said control device (10) comprises an upper portion (11) adapted to remain out of a soil (90) and a lower portion (12) adapted to be buried in the soil (90), said lower portion (12) of the control device (10) comprises at least one sensor of the multiplicity of sensors (31-36) of a list comprising the soil moisture sensor (35), a soil acidity sensor (36) .

8. Irrigation system according to claim 7, **characterised in that** said upper portion (11) of the control device (10) comprises at least one sensor of the multiplicity of sensors (31-36) of a list comprising an environmental luminosity sensor (31), an atmospheric temperature sensor (32), an atmospheric pressure sensor (33), an atmospheric humidity sensor (34).

9. Irrigation system according to any one of the claims 1-8, **characterised in that** said at least one processor (41) of the control device (10) estimates (108) said minimum threshold of moisture (210) of the soil (90) on the basis of mathematical and statistical algorithms and on the basis of observable data present in said at least one memory (42) that are observable parameters which comprise the maximum water retention capacity of the soil (207) estimated by said at least one control device (10) in the calibration step (100), and at least one of other data present in said at least one memory (42) and comprising observable data measured by said multiplicity of sensors (31-36), a time interval between the maximum (205), data present in memory 42 relating to a generic plant variety.

10. Irrigation system according to any one of the claims 1-9, **characterised in that** said at least one processor (41) estimates (108) the maximum suffering threshold of the plant variety (209) continuing to make said multiplicity of sensors (31-36) measure (102) the environmental parameters during the calibration step (100) and the processor (41) saves (103) said multiplicity of parameters in said at least one memory (42) during the evapotranspiration step (208) and when said at least one processor (41) verifies that a measured moisture of the soil is lower than the maximum suffering threshold (209) of the plant variety estimated previously and present in said at least one memory (42), said at least one processor (41) saves in said at least one memory (42) the time interval between the measurement of the value of maximum water retention capacity of the soil (207) and the maximum suffering threshold of the plant variety (209), recalculating the maximum suffering threshold (209) of the plant variety through mathematical and statistical algorithms and on the basis of observable data present in said at least one memory (42) which are observable parameters that comprise at least the maximum water retention capacity of the soil (207) and at least another parameter of observable data measured by said multiplicity of sensors (31-36), the time interval between the maximum (205) and the maximum water retention capacity of the soil (207), the maximum suffering threshold of the plant variety (209) estimated (108) previously, the time interval between the measurement of the value of maximum water retention capacity of the soil (207) and the maximum suffering threshold of the plant variety (209), data present in said at least one memory (42) relating to plant varieties.

11. Irrigation system according to any one of the claims 1-10, **characterised in that** said at least one processor (41) of the control device (10) comprises an artificial intelligence module adapted to implement a process of comparison and recognition through statistical algorithms of the curve (200) of observable data measured by the multiplicity of sensors (31-36) in the calibration step (100) and a multiplicity of curves (200) of corresponding observable data of a multiplicity of plant variety present in said at least one memory (42) .

## Patentansprüche

1. Bewässerungssystem umfassend einen Steuersatz (1), wobei das Bewässerungssystem mindestens ein Elektroventil (20) und mindestens einen Sensor aus einer Vielzahl von Sensoren (31-36) zur Messung mindestens eines Umgebungsparameters umfasst, wobei das mindestens eine Elektroventil (20) so eingerichtet ist, dass es von einer offenen Position, um eine Flüssigkeit des Bewässerungskreises (2) durchströmen zu lassen, in eine geschlossene Position umschaltet, um die Flüssigkeit des Bewässerungskreises (2) zu blockieren,
wobei der Steuersatz (1) mindestens eine in einen Boden (90) geführten Steuervorrichtung (10) umfasst, die ein Öffnen und ein Schließen des mindestens einen Elektroventils (20) steuert,
die mindestens eine Steuervorrichtung (10) mindestens einen Bodenfeuchtigkeitssensor (35) aus der Vielzahl der Sensoren (31-36),
mindestens einen Prozessor (41) zur Verarbeitung von Daten und
mindestens einen Speicher (42) zur Aufnahme von Daten umfasst,
wobei zumindest der Bodenfeuchtigkeitssensor (35) kontinuierlich oder in vordefinierten Zeitspannen Feuchtigkeitswerte des Bodens (90) misst (302), in dem die Steuervorrichtung (10) geführt wird,
der mindestens eine Speicher (42) mindestens einen maximalen Bodenfeuchtigkeitswert und einen anderen Bodenfeuchtigkeitswert enthält, der einem besseren Mindestschwellenwert (210) entspricht,
wobei der bessere Mindestschwellenwert (210) ein Bodenfeuchtigkeitsschwellenwert ist, der 5-10% höher als ein maximaler Schwierigkeitsschwellenwert der Pflanzensorte (209) ist, unterhalb dessen die Pflanzensorte aufgrund von Flüssigkeitssmangel absterben würde,
der mindestens eine Prozessor (41) der Steuervorrichtung (10) prüft (310), ob der von dem Bodenfeuchtigkeitssensor (35) gemessene Wert der Feuchtigkeit des Bodens (90) niedriger ist als der Wert der Bodenfeuchtigkeit, der der besseren Mindestschwelle (210) entspricht, und wenn dies verifiziert wird, befiehlt er dem mindestens einen Elektroventil (20), von der geschlossenen Position in die offene Position umzuschalten und den Boden (90) zu bewässern, bis der mindestens eine Prozessor (41) schätzt, dass die Feuchtigkeit des Bodens (90) den maximalen Bodenfeuchtigkeitswert erreicht, und befiehlt dem mindestens einen Elektroventil (20), von der offenen Position in die geschlossene Position umzuschalten,
wobei ein Bodenfeuchtigkeitswert, der einem maximalen Wasserrückhaltevermögen des Bodens (207) entspricht, von der mindestens einen Steuervorrichtung (10) in einem Kalibrierungsschritt (100) geschätzt wird, wobei das maximale Wasserrückhaltevermögen des Bodens (207) einen Feuchtigkeitsschwellenwert zwischen einem Schritt der Flüssigkeitsentwässerung durch Schwerkraft (206) und einem Schritt der Evapotranspiration (208) des Bodens und einer in den bewässerten Boden gepflanzten Pflanzensorte darstellt, wobei der Prozessor (41) dem mindestens einen Elektroventil (20) befiehlt (104), von der geschlossenen Position in die offene Position umzuschalten, um den Boden (90) zu bewässern, bis der bewässerte Boden (90) mit Flüssigkeit gesättigt ist und eine maximale (205) Feuchtigkeit des Bodens (90) erreicht, der mindestens eine Prozessor (41) in dem mindestens einen Speicher (42) mindestens eine Vielzahl von Bodenfeuchtigkeitsdaten als eine Funktion der Zeit speichert (107), während sich das mindestens eine Elektroventil (20) in der geschlossenen Position befindet, wobei der Wert der maximalen Wasserrückhaltevermögen des Bodens (207) identifiziert wird, wenn eine Kurve (200) der Vielzahl von Bodenfeuchtigkeitsdaten die Neigung zwischen dem Schritt der Flüssigkeitsentwässeerung durch Schwerkraft (206) und dem Schritt der Evapotranspiration (208) des Bodens (90) ändert.

2. Bewässerungssystem nach Anspruch 1, **dadurch gekennzeichnet, dass** der mindestens eine Prozessor (41) der Steuervorrichtung (10) schätzt, dass die Feuchtigkeit des bewässerten Bodens (90) den maximalen Bodenfeuchtigkeitswert erreicht, während sich das mindestens eine Elektroventil (20) in offener Stellung befindet, und der mindestens eine Prozessor (41) einen von dem Bodenfeuchtigkeitssensor (35) gemessenen Wert der Feuchtigkeit des Bodens (90) mit dem Feuchtigkeitswert des Bodens vergleicht (305), der dem maximalen Bodenfeuchtigkeitswert entspricht, der in dem Speicher (42) vorhanden ist, und wenn der mindestens eine Prozessor (41) feststellt, dass der gemessene Wert höher ist als der maximale Bodenfeuchtigkeitswert, unterbricht er die Bewässerung des Bodens (90), wodurch das mindestens eine Elektroventil (20) von der offenen Position in die geschlossene Position (306) umschaltet.

3. Bewässerungssystem nach einem der Ansprüche 1 oder 2, **dadurch gekennzeichnet, dass** der Steuersatz (1) einen Zeitspanne-Messer (37) umfasst, der Zeitspannen zwischen einem Öffnen und einem Schließen des mindestens einen Elektroventils (20) misst oder der Zeitspannen misst, um einen bestimmten Feuchtigkeitswert des Bodens zu erreichen.

4. Bewässerungssystem nach Anspruch 3, **dadurch gekennzeichnet, dass** der mindestens eine Speicher (42) eine Bewässerungszeitspanne (221) umfasst, um den Boden (90) bis zu dem Feuchtigkeitswert des Bodens (90), der dem maximalen Bodenfeuchtigkeitswert entspricht, zu bewässern, dass der mindestens eine Prozessor (41) der Steuervorrichtung (10) schätzt, dass die Feuchtigkeit des bewässerten Bodens (90) den maximalen Bodenfeuchtigkeitswert erreicht, während das mindestens eine Elektroventil (20) in offener Stellung ist, wenn das mindestens eine Elektroventil (20) für eine Zeit, die der Bewässerungszeitspanne (221) entspricht, in offener Stellung bleibt, dann befiehlt der mindestens eine Prozessor (41) dem mindestens einen Elektroventil (20), für die Dauer der Bewässerungszeitspanne (221) offen zu bleiben und dann von der offenen Position in die geschlossene Position (320) umzuschalten (304).

5. Bewässerungssystem nach einem der Ansprüche 1 bis 4, **dadurch gekennzeichnet, dass** der maximale Bodenfeuchtigkeitswert einem von einem Benutzer ausgewählten Bodenfeuchtigkeitswert entspricht.

6. Bewässerungssystem nach einem der Ansprüche 1-4, **dadurch gekennzeichnet, dass** der maximale Bodenfeuchtigkeitswert einem maximalen Wasserrückhaltevermögen des Bodens (207) entspricht, wobei das maximale Wasserrückhaltevermögen des Bodens (207) einen Schwellenwert der Feuchtigkeit zwischen einem Schritt der Flüssigkeitsentwässerung durch Schwerkraft (206) und einem Schritt der Evapotranspiration (208) des Bodens und einer in den bewässerten Boden gepflanzten Pflanzensorte darstellt.

7. Bewässerungssystem nach einem der Ansprüche 1 bis 6, **dadurch gekennzeichnet, dass** die Steuervorrichtung (10) einen oberen Abschnitt (11), der so eingerichtet ist, dass er außerhalb eines Bodens (90) verbleibt, und einen unteren Abschnitt (12), der so eingerichtet ist, dass er in den Boden (90) eingegraben wird, umfasst, wobei der untere Abschnitt (12) der Steuervorrichtung (10) mindestens einen Sensor aus der Vielzahl von Sensoren (31-36) einer Liste umfasst, die den Bodenfeuchtigkeitssensor (35) und einen Bodensäuregradsensor (36) umfasst.

8. Bewässerungssystem nach Anspruch 7, **dadurch gekennzeichnet, dass** der obere Abschnitt (11) der Steuervorrichtung (10) mindestens einen Sensor aus der Vielzahl von Sensoren (31-36) einer Liste umfasst, die einen Umgebung-Helligkeitssensor (31), einen atmosphärischen Temperatursensor (32), einen atmosphärischen Drucksensor (33) und einen atmosphärischen Feuchtigkeitssensor (34) umfasst.

9. Bewässerungssystem nach einem der Ansprüche 1-8, **dadurch gekennzeichnet, dass** der mindestens eine Prozessor (41) der Steuervorrichtung (10) den Mindestfeuchtigkeitsschwellenwert (210) des Bodens (90) auf der Grundlage von mathematischen und statistischen Algorithmen und auf der Grundlage von beobachtbaren Daten schätzt (108), die in dem mindestens einen Speicher (42) vorhanden sind, die beobachtbare Parameter sind, die das maximale Wasserrückhaltevermögen des Bodens (207), das von der mindestens einen Steuervorrichtung (10) im Kalibrierungsschritt (100) geschätzt wird, umfassen, und mindestens eines von anderen Daten, die in dem mindestens einen Speicher (42) vorhanden sind und beobachtbare Daten umfassen, die von der Vielzahl von Sensoren (31-36) gemessen werden, eine Zeitspanne zwischen dem Maximum (205), Daten, die in dem Speicher 42 vorhanden sind und sich auf eine generische Pflanzensorte beziehen.

10. Bewässerungssystem nach einem der Ansprüche 1-9, **dadurch gekennzeichnet, dass** der mindestens eine Prozessor (41) die maximale Schwierigkeitsschwelle der Pflanzensorte (209) schätzt (108), während die Vielzahl von Sensoren (31-36) die Umgebungsparameter während des Kalibrierungsschritts (100) misst (102) und der Prozessor (41) die Vielzahl von Parametern in dem mindestens einen Speicher (42) während des Evapotranspirationsschritts (208) speichert (103) und wenn der mindestens eine Prozessor (41) verifiziert, dass eine gemessene Feuchtigkeit des Bodens niedriger ist als die maximale Schwierigkeitsschwelle (209) der Pflanzensorte, die zuvor geschätzt wurde und in dem mindestens einen Speicher (42) vorhanden ist, der mindestens eine Prozessor (41) speichert in dem mindestens einen Speicher (42) die Zeitspanne zwischen der Messung des Wertes des maximalen Wasserrückhaltevermögen des Bodens (207) und der maximalen Schwierigkeitsschwelle der Pflanzensorte (209)durch Neuberechnung der maximalen Schwierigkeitsschwelle (209) der Pflanzensorte durch mathematische und statistische Algorithmen und auf der Grundlage von beobachtbaren Daten, die in dem mindestens einen Speicher (42) vorhanden sind, die beobachtbare Parameter sind, die mindestens das maximale Wasserrückhaltevermögen des Bodens (207) und mindestens einen anderen Parameter von beobachtbaren Daten, die durch die Vielzahl von Sensoren (31-36) gemessen werden, umfassen, die Zeitspanne zwischen dem Maximum (205) und dem maximalen Wasserrückhaltevermögen des Bodens (207), die zuvor geschätzte (108) maximale Schwierigkeitsschwelle der Pflanzensorte (209), die Zeitspanne zwischen der Messung des Wertes des maximalen Wasserrückhaltevermögens des Bodens (207) und der maximalen Schwierigkeitsschwelle der Pflanzensorte (209), Daten, die in dem mindestens einen Speicher (42) vorhanden sind und sich auf die Pflanzensorten beziehen.

11. Bewässerungssystem nach einem der Ansprüche 1-10, **dadurch gekennzeichnet, dass** der mindestens eine Prozessor (41) der Steuervorrichtung (10) ein künstliche Intelligenz-Modul umfasst, das geeignet ist, einen Vergleichs-und Erkennungsvorgang durch statistische Algorithmen der Kurve (200) von beobachtbaren Daten, die durch die Vielzahl von Sensoren (31-36) im Kalibrierungsschritt (100) gemessen werden, und einer Vielzahl von Kurven (200) von entsprechenden beobachtbaren Daten einer Vielzahl von Pflanzensorten, die in dem mindestens einen Speicher (42) vorhanden sind, zu implementieren.

## Revendications

1. Système d'irrigation comprenant un kit de commande (1), le système d'irrigation comprenant au moins une électrovanne (20) et au moins un capteur d'une multiplicité de capteurs (31-36) pour une mesure d'au moins un paramètre environnemental, ladite au moins une électrovanne (20) est conçue pour passer d'une position ouverte pour laisser passer un fluide du circuit d'irrigation (2), à une position fermée pour bloquer le fluide du circuit d'irrigation (2),
dans lequel le kit de commande (1) comprend au moins un dispositif de commande (10) enfoncé dans un sol (90) qui commande l'ouverture et la fermeture de ladite au moins une électrovanne (20),
ledit au moins un dispositif de commande (10) comprend au moins un capteur d'humidité du sol (35) de la multiplicité de capteurs (31-36),
au moins un processeur (41) pour le traitement des données et
au moins une mémoire (42) pour contenir des données,
dans lequel au moins ledit capteur d'humidité du sol (35) mesure (302) en continu ou à des intervalles de temps prédéfinis des valeurs d'humidité du sol (90) où le dispositif de commande (10) est enfoncé,
ladite au moins une mémoire (42) comprend au moins une valeur maximale d'humidité du sol et une autre valeur d'humidité du sol correspondant à un meilleur seuil minimal (210),
dans lequel ledit meilleur seuil minimal (210) est une valeur seuil d'humidité du sol qui est 5 à 10 % supérieure à un seuil de souffrance maximal de la variété végétale (209) en dessous duquel la variété végétale mourrait en raison du manque de fluide,
ledit au moins un processeur (41) du dispositif de commande (10) vérifie (310) si la valeur d'humidité du sol (90) mesurée par ledit capteur d'humidité du sol (35) est inférieure à la valeur d'humidité du sol correspondant audit meilleur seuil minimal (210), et si cela est vérifié, il commande à ladite au moins une électrovanne (20) de passer de la position fermée à la position ouverte irriguant le sol (90) jusqu'à ce que ledit au moins un processeur (41) estime que l'humidité du sol (90) atteint la valeur maximale d'humidité du sol, en commandant à ladite au moins une électrovanne (20) de passer de la position ouverte à la position fermée,
dans lequel une valeur d'humidité du sol correspondant à une capacité maximale de rétention d'eau du sol (207) est estimée par ledit au moins un dispositif de commande (10) lors d'une étape d'étalonnage (100), dans lequel ladite capacité maximale de rétention d'eau du sol (207) représente une valeur seuil d'humidité entre une étape de drainage de fluide par gravité (206) et une étape d'évapotranspiration (208) du sol et d'une variété végétale plantée dans le sol irrigué, dans lequel ledit processeur (41) commande (104) à ladite au moins une électrovanne (20) de passer de la position fermée à la position ouverte afin d'irriguer ledit sol (90) jusqu'à ce que le sol irrigué (90) soit saturé de fluide en atteignant une humidité maximale (205) du sol (90), ledit au moins un processeur (41) enregistre (107) dans ladite au moins une mémoire (42) au moins une multiplicité de données sur l'humidité du sol en fonction du temps pendant que ladite au moins une électrovanne (20) est en position fermée, identifiant la valeur de la capacité maximale de rétention d'eau du sol (207) lorsqu'une courbe (200) de ladite multiplicité de données sur l'humidité du sol change de pente entre l'étape de drainage de fluide par gravité (206) et l'étape d'évapotranspiration (208) du sol (90).

2. Système d'irrigation selon la revendication 1, **caractérisé en ce que** ledit au moins un processeur (41) du dispositif de commande (10) estime que l'humidité du sol irrigué (90) atteint la valeur maximale d'humidité du sol pendant que ladite au moins une électrovanne (20) est en position ouverte et ledit au moins un processeur (41) compare (305) une valeur d'humidité du sol (90) mesurée par ledit capteur d'humidité du sol (35) avec la valeur d'humidité du sol correspondant à la valeur maximale d'humidité du sol présente dans la mémoire (42) et si ledit au moins un processeur (41) constate que la valeur mesurée est supérieure à la valeur maximale d'humidité du sol, il interrompt l'irrigation du sol (90) en faisant passer ladite au moins une électrovanne (20) de la position ouverte à la position fermée (306).

3. Système d'irrigation selon l'une quelconque des revendications 1 ou 2, **caractérisé en ce que** le kit de commande (1) comprend un mesureur d'intervalles de temps (37) qui mesure les intervalles de temps entre une ouverture et une fermeture de ladite au moins une électrovanne (20) ou qui mesure les intervalles de temps pour atteindre une valeur déterminée d'humidité du sol.

4. Système d'irrigation selon la revendication 3, **caractérisé en ce que** ladite au moins une mémoire (42) comprend un intervalle de temps d'irrigation (221) pour irriguer ledit sol (90) jusqu'à la valeur d'humidité du sol (90) correspondant à la valeur maximale d'humidité du sol, ledit au moins un processeur (41) du dispositif de commande (10) estime que l'humidité du sol irrigué (90) atteint la valeur maximale d'humidité du sol pendant que ladite au moins une électrovanne (20) est en position ouverte lorsque ladite au moins une électrovanne (20) reste en position ouverte pendant un temps correspondant audit intervalle de temps d'irrigation (221), puis ledit au moins un processeur (41) commande (304) à ladite au moins une électrovanne (20) de rester ouverte pendant la durée dudit intervalle de temps d'irrigation (221) et de passer ensuite de la position ouverte à la position fermée (320).

5. Système d'irrigation selon l'une des revendications 1 à 4, **caractérisé en ce que** ladite valeur maximale d'humidité du sol correspond à une valeur d'humidité du sol sélectionnée par un utilisateur.

6. Système d'irrigation selon l'une quelconque des revendications 1 à 4, **caractérisé en ce que** ladite valeur maximale d'humidité du sol correspond à une capacité maximale de rétention d'eau du sol (207), où la capacité maximale de rétention d'eau du sol (207) représente une valeur seuil d'humidité entre une étape de drainage de fluide par gravité (206) et une étape d'évapotranspiration (208) du sol et d'une variété végétale plantée dans le sol irrigué.

7. Système d'irrigation selon l'une quelconque des revendications 1 à 6, **caractérisé en ce que** ledit dispositif de commande (10) comprend une partie supérieure (11) conçue pour rester hors du sol (90) et une partie inférieure (12) conçue pour être enterrée dans le sol (90), ladite partie inférieure (12) du dispositif de commande (10) comprend au moins un capteur de la multiplicité de capteurs (31-36) d'une liste comprenant le capteur d'humidité du sol (35), un capteur d'acidité du sol (36).

8. Système d'irrigation selon la revendication 7, **caractérisé en ce que** ladite partie supérieure (11) du dispositif de commande (10) comprend au moins un capteur de la multiplicité de capteurs (31-36) d'une liste comprenant un capteur de luminosité environnementale (31), un capteur de température atmosphérique (32), un capteur de pression atmosphérique (33), un capteur d'humidité atmosphérique (34).

9. Système d'irrigation selon l'une quelconque des revendications 1 à 8, **caractérisé en ce que** ledit au moins un processeur (41) du dispositif de commande (10) estime (108) ledit seuil minimal d'humidité (210) du sol (90) sur la base d'algorithmes mathématiques et statistiques et sur la base de données observables présentes dans ladite au moins une mémoire (42) qui sont des paramètres observables qui comprennent la capacité maximale de rétention d'eau du sol (207) estimée par ledit au moins un dispositif de commande (10) à l'étape d'étalonnage (100), et au moins d'autres données présentes dans ladite au moins une mémoire (42) et comprenant des données observables mesurées par ladite multiplicité de capteurs (31-36), un intervalle de temps entre les maxima (205), des données présentes dans la mémoire (42) relatives à une variété végétale générique.

10. Système d'irrigation selon l'une des revendications 1 à 9, **caractérisé en ce que** ledit au moins un processeur (41) estime (108) le seuil de souffrance maximale de la variété végétale (209) en continuant à faire mesurer (102) par ladite multiplicité de capteurs (31-36) les paramètres environnementaux pendant l'étape d'étalonnage (100) et le processeur (41) enregistre (103) cette multiplicité de paramètres dans ladite au moins une mémoire (42) pendant l'étape d'évapotranspiration (208) et lorsque ledit au moins un processeur (41) vérifie qu'une humidité mesurée du sol est inférieure au seuil de souffrance maximal (209) de la variété végétale estimé précédemment et présent dans ladite au moins une mémoire (42), ledit au moins un processeur (41) enregistre dans ladite au moins une mémoire (42) l'intervalle de temps entre la mesure de la valeur de capacité maximale de rétention d'eau du sol (207) et le seuil de souffrance maximale de la variété végétale (209), en recalculant le seuil de souffrance maximal (209) de la variété végétale au moyen d'algorithmes mathématiques et statistiques et sur la base de données observables présentes dans ladite au moins une mémoire (42) qui sont des paramètres observables comprenant au moins la capacité maximale de rétention d'eau du sol (207) et au moins un autre paramètre de données observables mesuré par ladite multiplicité de capteurs (31-36), l'intervalle de temps entre les maxima (205) et la capacité maximale de rétention d'eau du sol (207), le seuil maximal de souffrance de la variété végétale (209) estimé (108) précédemment, l'intervalle de temps entre la mesure de la valeur de la capacité maximale de rétention d'eau du sol (207) et le seuil maximal de souffrance de la variété végétale (209), des données présentes dans ladite au moins une mémoire (42) relatives aux variétés végétales.

11. Système d'irrigation selon l'une quelconque des revendications 1 à 10, **caractérisé en ce que** ledit au moins un processeur (41) du dispositif de commande (10) comprend un module d'intelligence artificielle conçu pour mettre en oeuvre un processus de comparaison et de reconnaissance par des algorithmes statistiques de la courbe (200) des données observables mesurées par la multiplicité de capteurs (31-36) à l'étape d'étalonnage (100) et d'une multiplicité de courbes (200) des données observables correspondantes d'une multiplicité de variétés végétales présentes dans ladite au moins une mémoire (42).
